**Europäisches Patentamt**

**European Patent Office**

**Office européen des brevets**

(19)

(11) Veröffentlichungsnummer: **0 314 176**

**A2**

(12) # EUROPÄISCHE PATENTANMELDUNG

(21) Anmeldenummer: **88118030.1**

(22) Anmeldetag: **28.10.88**

(51) Int. Cl.⁴: **B60P 1/52**

(30) Priorität: **28.10.87 DE 8714368 U**

(43) Veröffentlichungstag der Anmeldung:
**03.05.89 Patentblatt 89/18**

(84) Benannte Vertragsstaaten:
**AT BE CH DE ES FR GB GR IT LI LU NL SE**

(71) Anmelder: **Specht, Carl-Heinz**
**Ehlerstrasse 8**
**D-8000 München 80(DE)**

(72) Erfinder: **Specht, Carl-Heinz**
**Ehlerstrasse 8**
**D-8000 München 80(DE)**

(74) Vertreter: **Flügel, Otto, Dipl.-Ing.**
**Lesser, Flügel & Säger Patentanwälte.**
**Richard-Strauss-Strasse 56 Postfach 81 05 40**
**D-8000 München 80(DE)**

(54) **Ladegerät für ein Transportfahrzeug.**

(57) Ladegerät mit einer an einem Laufschienenrahmen zur Befestigung auf der Ladefläche eines Transportfahrzeuges längsverschiebbar gehaltenen Ladeplattform, das sich zum Zwecke einer möglichst spielfreien Halterung dadurch auszeichnet, daß der Laufschienenrahmen über eine Kupplung an dem Fahrzeugboden festlegbar ist, die einen hakenförmigen Vorsprung und starr damit ausgebildete, mit seitwärts gerichteten Anlageflächen versehene Wangen sowie einen Anschlag aufweist und mit einem weiteren Kupplungsglied versehen ist, welches einen Steg und starr damit ausgebildete, mit seitwärts gerichteten Halteflächen versehene Schenkel sowie einen Gegenanschlag aufweist, wobei im Betriebszustand der hakenförmige Vorsprung den Steg kuppelnd hintergreift und die Anlageflächen der Wangen an den Halteflächen der Schenkel spielfrei angreifen, während der Anschlag an dem Gegenanschlag dicht anliegt.

EP 0 314 176 A2

# LADEGERÄT FÜR EIN TRANSPORTFAHRZEUG

Die Erfindung betrifft ein Ladegerät mit einer Ladeplattform, die an einem Laufschienenrahmen längsverschiebbar gehalten ist, der auf der Ladefläche eines Transportfahrzeuges anzuordnen und dort mittels wenigestens einer Kupplung lösbar festzulegen ist, mit den Merkmalen des Oberbegriffes des Anspruches 1.

Ein Ladegerät der eingangs genannten Art beschreibt das Europäische Patent 78802. Dabei ist die Verbindung zwischen dem Laufschienenrahmen und einem an der Ladefläche des Fahrzeuges festgelegten Anker derart getroffen, daß der Anker etwa schlüssellochförmige Ausnehmungen aufweist, in welche ein Bolzen eingeschoben wird, der mit einem verdickt ausgebildeten Kopfteil durch die größere Ausnehmung des Schlüsselloches eingesetzt und mit einem bogenförmig konturierten Halsteil in den schmaleren Steg der schlüssellochförmigen Ausnehmung des Ankerteiles eingesetzt wird. Dabei ist ersichtlich ein verhältnismäßig großes Spiel im Rahmen dieses Eingriffes gegeben.

Darüber hinaus wird die Verladeplattform gegenüber dem über den Anker an dem Ladeboden des Fahrzeuges festgelegten Laufschienenrahmen durch einen federbelasteten Sperrriegel erreicht, der mit einem zylindrischen Kopf in eine entsprechende Aussparung einer gesondert für diesen Zweck vorgesehenen Arretierschiene eingreift.

Die Vorteile solcher Ladegeräte, die es erlauben, die Ladeplattform praktisch außerhalb des Fahrzeuges zu be laden und dann in das Fahrzeuginnere hineinzuverschieben, sind unter anderem in der vorgenannten europäischen Patentschrift beschrieben und ohne weiteres auf der Hand liegend. Die Anordnung insbesondere schwerer Lasten auf der Ladeplattform ist jedoch angesichts der während einer Fahrt auftretenden Erschütterungen und vor allem seitlichen Fliehkräfte nicht ohne Probleme. Beim Bremsen und bei Kurvenfahrten, Ausweichmanövern oder dergleichen versucht die Last auf der Ladeplattform bzw. die beladene Plattform in ihrer Gesamtheit aufgrund der Trägheitskraft ihre Lage beizubehalten, was dazu führt, dau erhebliche Kräfte auftreten, die im statischen Zustand ohne weiteres aufgefangen werden können, im Falle einer kinetischen Komponente jedoch ganz erhebliche Belastungen der Verankerung am Fahrzeugboden mit sich bringen. Dabei genügen bereits verhältnismäßig geringe Spielräume bzw. Bewegungsstrecken des Laufrahmens gegenüber der chassisfesten Verankerung des Ladegerätes und insoweit auch der Plattform gegenüber dem Laufrahmen, um erhebliche kinetische Energien freizusetzen, die sich schlagartig insbesondere auf die Befestigung des Ladegerätes an der Ladefläche des Fahrzeuges auswirken. Dabei muß bedacht werden, daß diese Ladefläche ihre Steifigkeit in der Regel durch eine entsprechende Blechstrukturierung bzw. Formgebung erhält, das Blech selbst aber so dünn wie möglich gehalten wird. Diese kinetischen Belastungen bedingen somit die Gefahr einer schnellen Lockerung der Verankerung, des Ausschlagens von Bohrungen in der Ladefläche des Fahrzeuges und dergleichen mehr, wodurch sich das Spiel erhöht und die kinetischen Belastungen anwachsen, bis ein Ausreissen des Ladegerätes aus der Befestigung an der Ladefläche des Fahrzeuges auftritt, was zu erheblichen Schäden und Gefährdungen führen kann.

Der Erfindung liegt die Aufgabe zugrunde, ein Ladegerät der eingangs genannten Art zur Verfügung zu stellen, das trotz verhältnismäßig einfacher und insbesondere raumsparender Anordnung des für die Verankerung an dem Fahrzeugboden vorgesehenen Kupplungsteiles von schlagartigen Belastungen zumindest weitgehend befreit ist.

Ausgehend von einem Ladegerät mit den Merkmalen des Oberbegriffes des Anspruches 1 wird diese Aufgabe erfindungsgemäß durch dessen kennzeichnende Merkmale gelöst.

Erfindungsgemäß wird also dafür gesorgt, daß im Rahmen der Kupplung zwischen dem Laufrahmen und dem Fahrzeugboden so gut wie kein Spiel auftreten kann; es wird vielmehr eine Art Verklemmung sichergestellt, so daß bei seitwärts gerichteten Belastungen oder dergleichen eine Relativgeschwindigkeit zwischen den Kupplungsteilen nicht auftreten kann, weshalb die kinetische Komponente der Belastung zu Null wird.

In besonders bevorzugter Ausführung der Erfindung wird auch die Arretierung der Ladeplattform gegenüber dem Laufrahmen zumindest annähernd spielfrei gestaltet, wozu insbesondere ein Sperrglied mit einem schlanken Konus versehen ist, der arretierend in eine von mehreren Bohrungen federbelastet eingreift.

Damit ist Sorge dafür getragen, daß insgesamt zwischen der Ladeplattform und dem Fahrzeugboden bzw. der Ladefläche des Fahrzeuges praktisch kein Spiel auftritt und damit Stoßbelastungen ausgeschaltet sind.

In erster Ausführungsform sind die Laufschienen U- bzw. C-förmig ausgebildet, und die vorzugsweise als Kugellager ausgebildeten Rollen sind in die Schienen eingesetzt. Die Positionierung der Ladeplattform gegenüber dem Laufschienenrahmen ist damit auf verschiedene Weise sicherzustellen, entweder durch Angriff und Ausrichtung an dem Stegteil der beiden Laufschienen oder aber an den in Achsrichtung abragenden Vorsprüngen der C-förmigen Laufschienen.

Eine weitere Ausführungsform sieht vor, die Zuordnung zwischen den Laufrollen und den Laufflächen der Laufschienen derart zu gestalten, daß die Laufrollen nur mit ihren Rändern ihrer Lauffläche an zwei winklig zueinander verlaufenden Laufflächen der Laufschienen anliegen. Eine derartige "Schrägstellung" zwischen Laufschiene und Laufrolle kann man entweder durch Schrägstellung der Laufschiene oder aber durch eine entsprechend schräge Achsrichtung der Laufrollenanordnung erreichen. Dabei dient der eine Randangriff der Laufrolle an der Schiene der Aufnahme des Gewichtes, während der dazu winklig verlaufende Anlagebereich die axiale Positionierung der Ladeplattform im Bezug auf den Laufschienenrahmen bestimmt. Durch axiale Einstellbarkeit der Laufrollen, beispielsweise durch Muttern, erreicht man, daß man praktisch spielfreie Verhältnisse erreichen kann. Um bei Stößen oder dergleichen ein Ausheben der Laufrollen aus dem Laufschienenrahmen zu verhindern, kann ein Winkelprofil vorgesehen werden, das wiederum zum Zwecke der spielarmen Einstellung in vertikaler Richtung verstellbar an der Laufschiene befestigt sein kann.

Diese oder weitere Ausgestaltungen der Erfindung ergeben sich aus den Ünteransprüchen im Zusammenhang mit den in der Zeichnung wiedergegebenen Ausführungsbeispielen, auf die besonders Bezug genommen wird und deren nachfolgende Beschreibung die Erfindung näher erläutert. Es zeigen

Figur 1 die rückwärtige Ansicht eines Transportfahrzeuges mit hochgeklappter Heckklappe und entsprechender Rückansicht eines Ladegerätes gemäß der Erfindung;

Figur 2 eine Draufsicht auf das Ladegerät bei abgenommener Ladeplattform;

Figuren 3 bis 5 eine horizontale Schnittansicht, eine von der Vorderseite des Fahrzeuges her gesehene Seitenansicht und eine in Richtung des Fahrzeugbodens gesehene Draufsicht eines Kupplungsbereiches zwischen dem Laufschienenrahmen und dem Fahrzeugboden;

Figur 6 eine Teilschnittdarstellung quer zur Längsachse einer Laufschiene zur Verdeutlichung der Laufrollenanordnung;

Figur 7 ein Schnittbild ähnlich demjenigen gemäß Figur 6 an einer Stelle im Längsverlauf der Laufschiene, an der eine Sperriegeleinrichtung vorgesehen ist, die als Schnittbild in Längsrichtung der Laufschienen gesehen wiedergegeben ist;

Figur 8 eine Teilansicht der Sperriegeleinrichtung senkrecht zur Ladefläche des Fahrzeuges gesehen;

Figuren 9 und 10 eine Draufsicht und eine Seitenansicht auf einen Anschlußbereich zwischen einer Laufschiene und einer Laufschienenverlängerung;

Figur 11 eine Schnittdarstellung entsprechend derjenigen gemäß Figur 6 einer anderen Laufrollen-Laufschienen-Zuordnung.

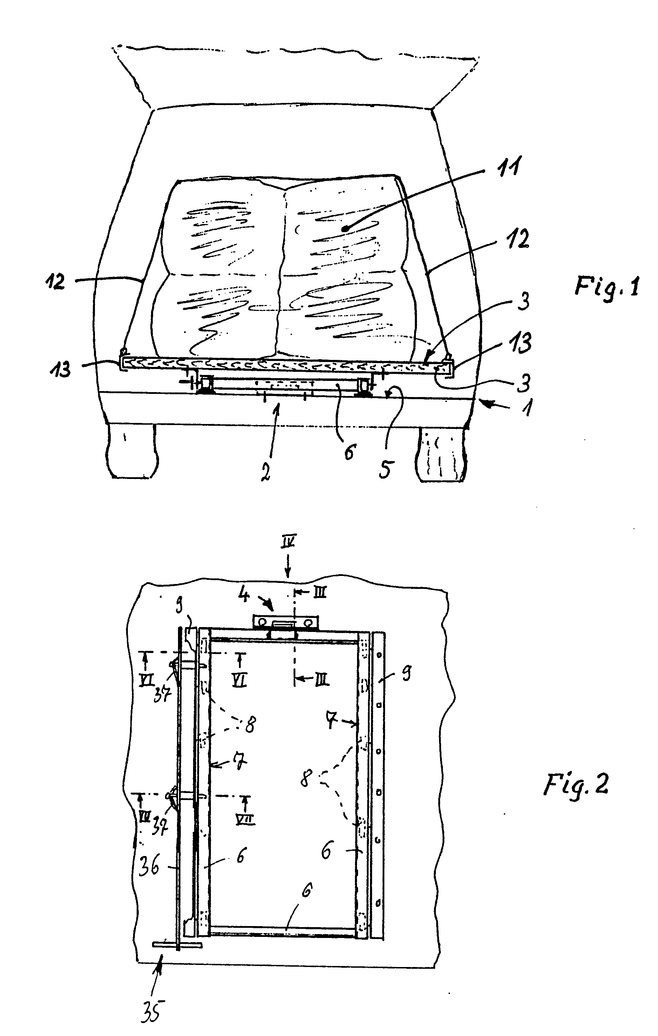

Das den Ausführungsbeispielen zugrundeliegende Ladegerät ist grundsätzlich in jedes Fahrzeug einbaubar, das entsprechende Platzvoraussetzungen erfüllt, insbesondere aber für Kleintransporter oder Kombiwagen bestimmt. Figur 1 zeigt die Rückansicht eines sochen Kombiwagens mit hochgestellter Heck-Verschlußklappe, auf dem Fahrzeugchassis 1 ist das insgesamt mit 2 bezeichnete Ladegerät angeordnet.

Das Ladegerät 2 ist mit einer Ladeplattform 3 versehen, die an einem insgesamt mit 6 bezeichneten Laufschienenrahmen längsverschiebbar gehalten ist. Der Laufschienenrahmen 6 ist auf der Ladefläche 5 des Chassis 1 eines Transportfahrzeuges angeordnet und dort mittels wenig stens einer insgesamt mit 4 bezeichneten Kupplung lösbar festgelegt. Das eine Glied der Kupplung ist als Einhängeglied 14 an dem Laufschienenrahmen 6 angeordnet, während das andere Kupplungsglied als Halteglied an dem Fahrzeugboden befestigt ist, und zwar in bezug auf das Ausführungsbeispiel eines Kombiwagens anschliessend an den Rücksitzlehenbereich. Die beiden Kupplungsglieder 14 oder 15 greifen in der Betriebslage des Laufschienenrahmens 8 auf der Ladefläche 5 des Chassis 1 formschlüssig ineinander und sind durch Verschwenken in etwa senkrecht zur Ladefläche 5 verlaufende Ebene und um den Kupplungsbereich herum in eine Lage versetzbar, in der sie durch Auseinanderziehen trennbar sind. Die Ladeplattform 3 des Ladegerätes ist in wenigstens einer Längsverschiebestellung gegen eine Längsverschiebung gegenüber dem Laufschienenrahmen 6 mittels eines Sperriegels 10 arretierbar, welcher Sperriegel durch eine Feder 34 in seiner Arretierstellung beaufschlagt und von Hand aus dieser Arretierstellung gegen die Federkraft lösbar ist.

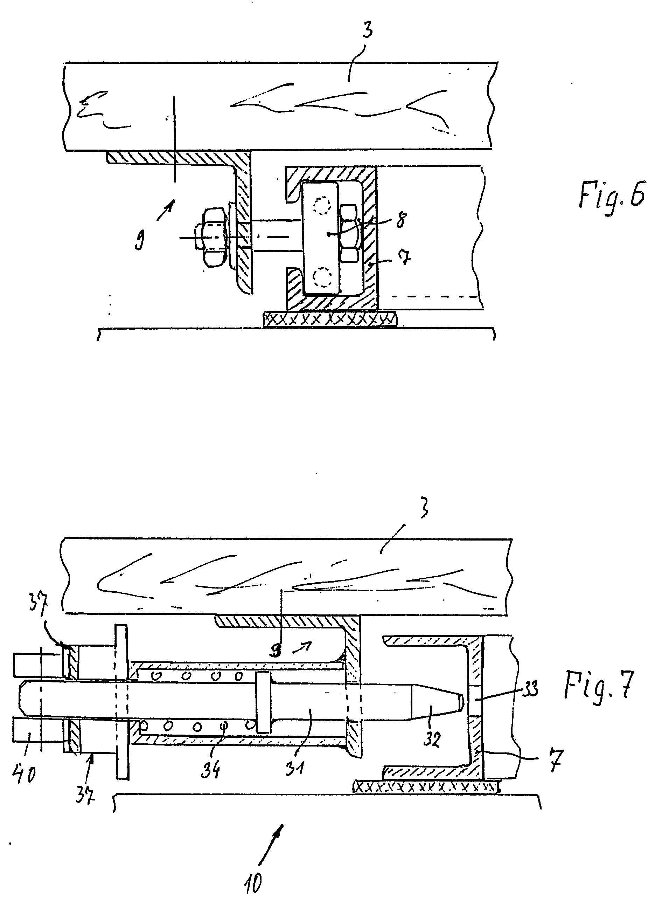

Der Laufschienenrahmen 6 weist zwei parallel in Fahrzeuglängsrichtung verlaufende Laufschienen 7 auf, die etwa U-förmig oder - Figur 6 - C-förmig ausgebildet sind und jeweils wenigstens drei Rollen 8 aufnehmen, die an dem einen Schenkel des Tragschienen-Winkelprofils 9 gehalten sind, dessen anderer Schenkel an der Unterseite der Ladeplattform 3 festgelegt ist.

Wie in Figur 1 schematisch wiedergegeben, kann auf der Ladeplattform 3 ein Lastballen 11, der hier stellvertretend für alle möglichen Lasten wiedergegeben ist, aufgenommen werden, der mit Hilfe von vorzugsweise federelastischen Spannseilen 12 auf der Fläche der Ladeplattform 3 gehalten ist, wobei die Spannseile 12 mit Hilfe von Aufsteckklammern 3 an den Seitenkanten der Ladeplattform befestigt werden könne. Dies nur als Beispiel.

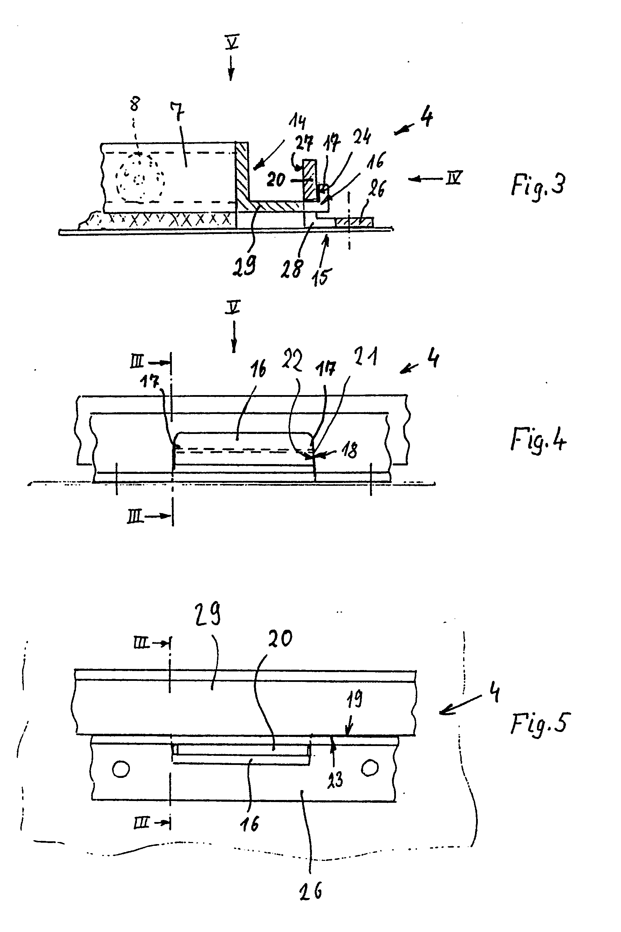

In den Figuren 3 bis 5 ist die insgesamt mit 4 bezeichnete Kupplung in Teilansichten wiedergegeben. Das insgesamt mit 14 bezeichnete Einhängeglied ist an dem Laufschienenrahmen 6 befestigt bzw. bildet den in Fahrzeuglängsrichtung gesehen vorderen Abschlußbereich dieses Rahmens und weist einen hakenförmigen Vorsprung 16 auf, der mit seitwärts gerichteten Anlageflächen 18 versehene Wangen 17 sowie einen Anschlag 19 umfaßt, während das Halteglied 15 der Kupplung, das an dem Fahrzeugboden 5 befestigt ist, einen Steg 20 und insoweit starr damit ausgebildete, mit seitwärts gerichteten Halteflächen 22 versehene Schenkel 21 sowie einen Gegenanschlag 23 aufweist. Im Einkupplungszustand hintergreift der hakenförmige Vorsprung 16 des Einhängegliedes 14 den Steg 20 des Haltegliedes 15, wobei die Anlageflächen 18 der Wangen 17 an den Halteflächen 22 der Schenkel 21 spielfrei angreifen und der Anschlag 19 an dem Gegenanschlag 23 dicht anliegt.

Der hakenförmige Vorsprung 16 ist im Querschnitt etwa rechtwinklig ausgebildet und in der Gebrauchslage mit seinem frei auslaufenden, den Steg 20 hintergreifenden Abschnitt 24 senkrecht zur Breitfläche der Ladeplattform 3 gerichtet. Der Vorsprung 16 ist einstückig angeformtes Teil eines winkelförmigen Profils 29. Der Steg 20 des anderen Kupplungsteiles ist an einem etwa winkelförmigen Trägerteil 26 vorgesehen. Das Trägerteil 26 ist dabei im Querschnitt etwa rechtwinklig ausgebildet. Der in der Gebrauchsstellung etwa senkrecht zur Breitfläche der Ladeplattform 3 gerichtet abragend verlaufende Winkelschenkel 27 ist mit einer zur Winkelecke hin gelegenen Aussparung 28 versehen, in die der Vorsprung 16 eingreifend geführt ist und die zur frei auslaufenden Kante des abragenden Winkelschenkels 27 durch einen streifenförmigen Profilabschnitt begrenzt ist, der den Steg 20 bildet. Die Figuren 3 bis 5 zeigen die Kupplung im Einkupplungszustand. Will man das Ladegerät aus dem Fahrzeug entfernen, so hebt man die Ladeplattform mit dem Laufschienenrahmen 6 an, so daß der Vorsprung 16 aus dem Hintergriff mit dem Steg 20 gelöst wird und durch die Öffnung 28 aus der Verbindung mit dem winkelförmigen Teil 26 gelöst werden kann, wie dies die Zeichnung ohne weiteres erkennen läßt. Umgekehrt läßt sich die Ladeplattform 3 mit dem Laufschienenrahmen 6 in entsprechend von der Ladefläche 5 angehobener schräg liegender Stellung mit dem Vorsprung 16 durch die Öffnung 28 in das Teil 26 einführen und hintergreift mit dem Vorsprung 16 durch Absenken der Ladeplattform 3 mit dem Rahmen 6 den Steg 20 des anderen Kupplungsteils.

Die in der Gebrauchslage einander zugewandten Flächen des winkelförmigen Profils 29 einerseits und des Trägerteils 26 andererseits sind als Anschlag 19 bzw. Gegenanschlag 23 ausgebildet, die in der Hintergriffslage zwischen dem Vorsprung 16 und dem Steg 20 spielfrei aneinander liegen.

Insgesamt ist damit sichergestellt, daß im Einkupplungszustand in horizontaler Ebene keinerlei Spielraum gegeben ist, so daß eine Relativbewegung der Ladeplattform und des Laufschienenrahmens gegenüber der Ladefläche des Fahrzeugs nicht stattfinden kann, wodurch dynamische Belastungen vermieden sind. In vertikaler Richtung zur Ladefläche des Fahrzeuges gesehene Belastungen bzw. Belastungswechsel, die sich bei Durchfahren von Schlaglöchern oder dergleichen ergeben können, belasten die Verankerung der Kupplung an der Ladefläche des Fahrzeuges insoweit nicht.

Im Ausführungsbeispiel ist eine einzige Kupplung der vorbeschriebenen Art wiedergegeben. Es versteht sich, daß auch zwei oder mehrere solcher Kupplungen in symetrischer Anordnung zur Fahrzeugachse verteilt vorgesehen werden können. Die Kupplung kann auch zweigeteilt ausgebildet sein, wobei jeder Teil etwa längssymetrisch zur Verschiebemittelachse der Ladeplattform angeordnet ist sowie jeweils einen der spielfreien Angriffe zwischen den Anlageflächen und den Halteflächen der beiden Kupplungsteile und die dichte Anlage zwischen dem Anschlag und dem Gegenanschlag aufweist.

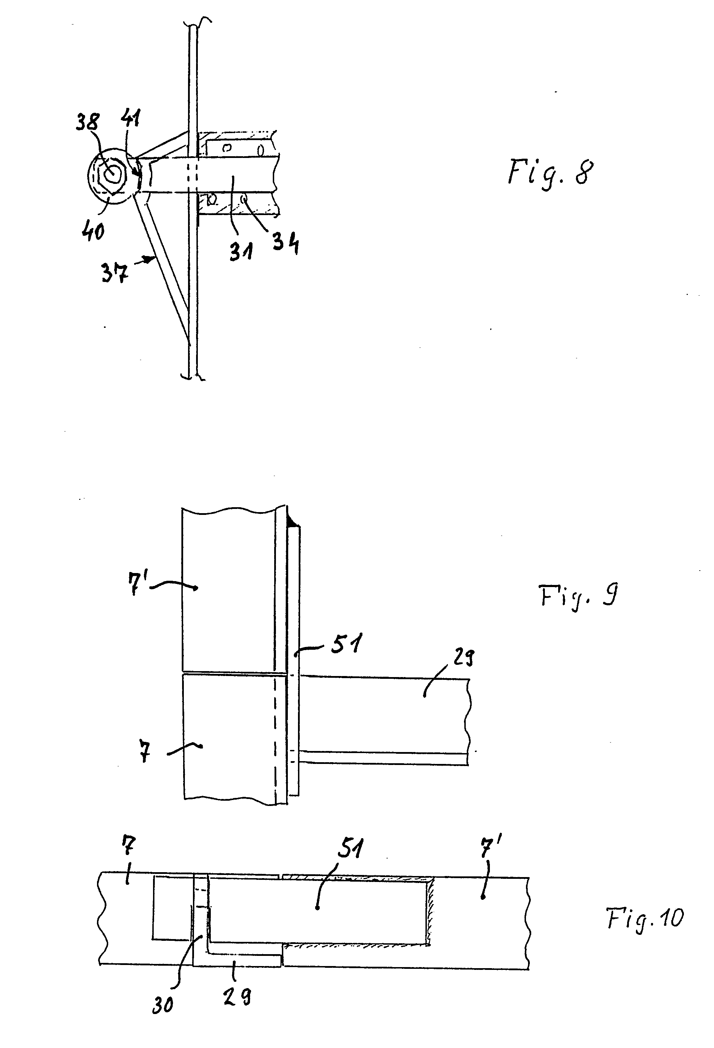

In Figur 6 ist ein C-förmiges Laufschienenprofil wiedergegeben, bei welchem die vorzugsweise als Kugellager ausgebildete Laufrolle in Richtung auf die Verschiebelängsrichtung des Ladegerätes gesehen an den Innenflächen der abragenden Vorsprünge des C-förmigen Profils anliegen, wodurch die seitliche Versetzbarkeit zwischen der Ladeplattform 3 und dem Laufschienenrahmen 6 verhindert wird. In Figur 7 ist ein U-förmiges Profil der Laufschienen gezeigt, dabei muß die seitliche Versetzbarkeit zwischen den Laufrollen und den Laufschienen anders sichergestellt werden, beispielsweise durch Anlage der entsprechenden seitlichen Laufflächenbegrenzung der Laufrollen an dem Mittelsteg des Profils. Es kann jedoch auch die Laufrollenachse zur Begrenzung des Spiels herangezogen werden.

Aus dem Schnittbild gemäß Figur 7 ist das Prinzip einer Sperriegeleinrichtung ersichtlich, mit dem die Ladeplattform 3 gegenüber dem Laufschienenrahmen 6 möglichst spielfrei festgelegt werden soll. Zu diesem Zwecke weist die Sperriegeleinrichtung 10 wenigstens einen etwa senkrecht zur Laufschienen- bzw. Plattformbewegungsrichtung verschiebbar gelagerten Sperrstift 31 auf, der mit einem schlankkonisch ausgebildeten Spitzendbereich 32 in eine von mehreren, in Laufschienenlängsrichtung in dieser versetzt angeordnete Bohrungen 33 unter der Kraft einer Feder 34 eingreift und mittels einer handbetätigbaren Löseeinrichtung 35 aus dem Eingriff mit der jeweiligen Bohrung gegen die Kraft der Feder 34 aushebbar ist. Diese handbe tätigte Löseeinrichtung 35 weist eine etwa parallel zur Verschieberichtung der Ladeplattform 3 an der Plattformunterseite verschiebbar gehaltene Stange 36 auf, die mit schräg zu ihrer Längsrichtung von dem Eingriff des bzw. der Sperrstifte 31 in die Bohrung 33 abstrebenden Aushebeflächen 37 versehen ist. An diesen Aushebeflächen 37 greifen Vorsprünge 38 an, und zwar vorzugsweise in Form von Wälzgliedern 40, die an dem dem spitzen Endbereich der Sperrstifte abgewandten Ende dieser Stifte vorgesehen sind und die an den Aushebeflächen 37 im Zuge der Betätigung der Stange 36 der Löseeinrichtung 35 ablaufen. Diese Einrichtungen sind insbesondere aus den Figuren 7 und 8 ersichtlich. Die Aushebeflächen 37 sind vorzugsweise jeweils mit einer Raststelle 41 versehen, in die die Wälzlage 40 der Vorsprünge 38 eingreifen, wenn die Löseeinrichtung 35 in den Entriegelungszustand überführt wird, wie dies Figur 8 zeigt.

In den Figuren 9 und 10 sind zwei Ansichten eines Verbindungsteilbereiches wiedergegeben, die den Anschluß einer Verlängerungslaufschiene 7' an eine Laufschiene 7 wiedergeben. Eine solche Verlängerung kann sowohl im vorderen Bereich des Laufschienenrahmens 6 vorgesehen werden, um beispielsweise bei entsprechend umgeklappten Rücksitzen die Verschiebefähigkeit der Ladeplattform in Richtung auf die Vorderseite des Fahrzeuges hin zu erhöhen, es ist aber insbesondere auch von Interesse, eine solche Laufschienenverlängerung im rückwärtigen Bereich vorzusehen, um die Ladefläche bei Ausfahren aus dem Fahrzeug nicht nur über die Laufrollen an den Laufschienen 7 des Laufschienenrahmens 6 zu halten, sondern zusätzlich durch Auflage auf solchen Verlängerungs-Laufschienen 7' abzustützen. Beim Ausführungsbeispiel nach den Figuren 9 und 10 ist an der Zusatz Laufschiene 7' außenseitig ein Kupplungsplatte 51 angeschweißt, die mit einer Ausnehmung den nach oben ragenden Endabschnitt 30 des winkelförmigen Profils 29 des vorderen Laufschienenrahmenbereiches umgreift. Auf diese Weise kann eine verhältnismäßig starre und liniengetreue Kupplung zwischen den Laufschienen 7 des Laufschienenrahmens 6 und den Zusatz-Laufschienen 7' erreicht werden. Die Beabstandung der Zusatz-Laufschienen 7' kann durch entsprechende Querverbindungen sichergestellt werden, die einfach zwischen die Schienen eingesetzt werden kann. Anstelle der Kupplungsplatten 51 können zwischen den Endbereichen der Laufschienen 7 und den angrenzenden Endbereichen der Zusatz-Laufschienen 7' auch Scharniere vorgesehen werden, und zwar derart, daß die Zusatz-Laufschienen 7' in vertikaler oder in horizontaler Richtung abgeklappt werden können. Im aufgeklappten Zustand, wenn diese Zusatz-Lauschienen also benötigt werden, kann zwischen diesen wiederum eine abstandshaltende Verstebung eingesetzt sein. Auch diese kann über Scharniere an der bzw. den Laufschienen festgelegt sein, so daß keine losen Teile entstehen.

Figur 11 zeigt eine Laufschienen-Laufrollen-Anordnung, die im Vergleich zu dem Schnittbild gemäß Figur 6 eine abgewandelte Ausführung des Ladegerätes darstellt. Dabei weisen die Laufschienen 7'' des Profilrahmens 6 eine etwa Horizontale 42 und eine aufwärts abstrebende 43 Laufflache auf, an welchen beiden Laufflächen jeweils eine der beiden Randzonen 44 und 45 der Abrollfläche 46 einer Rolle 8' die insbesondere als Kugellager ausgebildet ist, angreifen. Dabei ist die Laufachse 44 der Rolle schräg zur Horizontalen verlaufend angeordnet, und in bevorzugter Ausbildung ist die Laufrolle in Achsrichtung einstellbar ausgebildet, beispielsweise durch Schrauben 48, die in ein Gewinde eines die Achse bildenden Bolzens 49 eingreifen. Dabei ist an der Laufschiene 7'' ein insbesondere winkelförmig ausgebildetes Profil 50 vorgesehen, das etwa vertikal verstellbar an der Laufschiene gehalten ist und daß die Rollen 8'' von oben her übergreift, wie dies die Figur zeigt. Damit wird verhindert, daß bei vertikal gerichteten Kräften ein Abheben der Ladeplattform gegenüber dem Laufschienenrahmen stattfinden kann.

## Ansprüche

1. Ladegerät mit einer Ladeplattform, die an einem Laufschienenrahmen längsverschiebbar gehalten ist, der auf der Ladefläche eines Transportfahrzeuges, insbesondere eines Kombiwagens, anzuordnen und dort mittels wenigstens einer Kupplung lösbar festzulegen ist, deren eines Glied als Einhängeglied an dem Laufschienenrahmen und deren anderes Glied als Halteglied an dem die Ladefläche bildenden Fahrzeugboden - vorzugsweise nach hinten - an den Rücksitzlehnenbereich anschließend oder bei seitlicher Beladung an den gegenüber der Seitentür gelegenen Endbereich der Ladefläche anschließend zu befestigen ist, welche beiden Glieder in der Betriebslage des Laufschienenrahmens auf der Ladefläche aufliegend formschlüssig ineinandergreifen und durch Verschwenken in etwa senkrecht zur Ladefläche verlaufender Ebene und um den Kupplungsbereich herum in eine Lage geraten, in der sie durch Auseinanderziehen trennbar sind, wobei die Ladeplattform in wenigstens einer Längsverschiebestellung gegen eine Längsverschiebung gegenüber dem Laufschienenrahmen mittels eines Sperriegels arretier bar ist, der durch eine Feder in seiner Arretierstellung beaufschlagt und von Hand aus dieser Arretierstellung gegen die Federkraft lösbar ist, **dadurch gekennzeichnet,** daß das eine (14) der beiden Glieder (14, 15) der Kupplung (4) einen hakenförmigen Vorsprung (16) und starr damit ausgebildete, mit seitwärts gerichteten Anlageflächen (18) versehene Wangen (17) sowie einen Anschlag (19) aufweist, daß das andere (15) der beiden Glieder (14, 15) einen Steg (20) und insoweit starr damit ausgebildete, mit seitwärts gerichteten Halteflächen (22) versehene Schenkel (21) sowie einen Gegenanschlag (23) aufweist und daß der hakenförmige Vorsprung (16) des einen Gliedes (14) den Steg (20) des anderen Gliedes (15) kuppelnd hintergreift, wobei die Anlageflächen (18) der Wangen (17) an den Halteflächen (22) der Schenkel (21) spielfrei angreifen und der Anschlag (19) an dem Gegenanschlag (23) dicht anliegt.

2. Ladegerät nach Anspruch 1,
**dadurch gekennzeichnet,** daß der hakenförmige Vorsprung (16) an dem an dem Laufschienenrahmen (6) vorgesehenen Glied (14) der Kupplung (4) ausgebildet ist, während der von dem Vorsprung (16) hintergriffene Steg (20) an dem mit dem Fahrzeugboden bzw. des Ladefläche (5) zu verbindenden Glied (15) der Kupplung (6) vorgesehen ist.

3. Ladegerät nach Anspruch 1 oder 2,
**dadurch gekennzeichnet,** daß der hakenförmige Vorsprung (16) im Querschnitt etwa winkelförmig ausgebildet ist und in der Gebrauchslage mit seinem frei auslaufenden, den Steg (20) hintergreifenden Abschnitt (24) etwa senkrecht zur Breit fläche der Ladeplattform (3) gerichtet ist.

4. Ladegerät nach Anspruch 3,
**dadurch gekennzeichnet,** daß der Vorsprung (16) von einem winkelförmigen Profil (29) vorspringend ausgebildet ist.

5. Ladegerät nach einem der Ansprüche 1 bis 4,
**dadurch gekennzeichnet,** daß der Steg (20) an einem etwa winkelförmigen Trägerteil (26) vorgesehen ist.

6. Ladegerät nach Anspruch 5,
**dadurch gekennzeichnet,** daß das Trägerteil (26) im Querschnitt etwa winkelförmig ausgebildet ist und daß der in der Gebrauchsstellung etwa senkrecht zur Breitfläche der Ladeplattform (3) gerichtet abragend verlaufende Winkelschenkel (27) eine zur Winkelecke hin gelegene Aussparung (28) aufweist, in die der Vorsprung (16) eingreifend geführt ist und die zur frei auslaufenden Kante des abragenden Winkelschenkels (27) durch einen streifenförmigen Profilabschnitt begrenzt ist, der den Steg (20) bildet.

7. Ladegerät nach einem der Ansprüche 4 bis 6,
**dadurch gekennzeichnet,** daß die in der Gebrauchslage einander zugewandten Flächen des winkelförmigen Profils (29) einerseits und des Trägerteils (26) andererseits als Anschlage (19) bzw. Gegenanschlag (23) ausgebildet sind, die in der Hintergriffslage zwischen dem Vorsprung (16) und dem Steg (20) spielfrei aneinanderliegen.

8. Ladegerät nach einem der Ansprüche 1 bis 7,
**dadurch gekennzeichnet,** daß die Halteflächen (22) der Schenkel (21) im Bereich der Seitenflächen der Aussparung (28) des Trägerteils (26) des Haltegliedes (15) der Kupplung (4) und die Anlageflächen (18) der Wangen (17) des Vorsprungs (16) des Einhängegliedes (14) der Kupplung (4) in der Hintergriffslage des Vorsprunges (16) und des Steges (20) spielfrei aneinanderliegen und vorzugsweise durch eine leichte Schräglage zur Senkrechten im Zuge des Hintergreifvorganges aneinander zunehmend spielfrei bzw. druckbelastet angreifen.

9. Ladegerät nach einem der Ansprüche 1 bis 8,
**dadurch gekennzeichnet,** daß zwei Kupplungen vorgesehen sind, die etwa längssymmetrisch zur Verschiebemittelachse der Ladeplattform angeordnet sind.

10. Ladegerät nach einem der Ansprüche 1 bis 8,
**dadurch gekennzeichnet,**daß die Kupplung zweigeteilt ausgebildet und jeder Teil etwa längssymmetrisch zur Verschiebemittelachse der Ladeplattform angeordnet ist sowie jeweils einen der spielfreien Angriffe zwischen den Anlageflächen und den Halteflächen sowie die dichte Anlage zwischen dem Anschlag und dem Gegenanschlag aufweist.

11. Ladegerät nach einem der Ansprüche 1 bis 10,
**dadurch gekennzeichnet,** daß die Laufschiene (7) des Laufschienenrahmens (6) etwa U- oder C-förmig ausgebildet sind und jeweils wenigstens drei Rollen (8) aufnehmen, die an dem einen Schenkel des Tragschienen-Winkelprofils (9) etwa waagerecht abragend gehalten sind, dessen anderer Schenkel an der Unterseite der Ladeplattform (3) festgelegt ist.

12. Ladegerät nach einem der Ansprüche 1 bis 10,
**dadurch gekennzeichnet,** daß die Laufschienen (7') des Profilrahmens (6) eine etwa horizontale (42) und eine aufwärts abstrebende (43) Lauffläche aufweisen, an welchen Laufflächen (42, 43) jeweils eine der beiden Randzonen (44, 45) der Abrollfläche (46) einer Rolle (8'), insbesondere Kugellager, angreifen, deren Laufachse (47) schräg zur Horizontalen verlaufend angeordnet ist und die insbesondere in Richtung ihrer Achse einstellbar ausgbildet ist, beispielsweise durch Schrauben (48), die in ein Gewinde eines die Achse bildenden Bolzens (49) eingreifen, wobei an der Laufschiene (7') ein insbesondere winkelförmig ausgebildetes Profil (50) etwa vertikal verstellbar gehalten ist, welches die Rollen (8') von oben her übergreift.

13. Ladegerät nach einem der Ansprüche 1 bis 12,

**dadurch gekennzeichnet,** daß die Sperriegeleinrichtung (10) wenigstens einen etwa senkrecht zur Laufschienen- bzw. Plattformbewegungsrichtung verschiebbar gelagerten Sperrstift (31) aufweist, der mit einem schlankkonisch ausgebildeten Spitzenendbereich (32) in eine von mehreren, in Laufschienenlängsrichtung in dieser versetzt angeordnete Bohrungen (33) unter der Kraft einer Feder (34) eingreift und mittels einer handbetätigbaren Löseeinrichtung (35) aus dem Eingriff mit der jeweiligen Bohrung gegen die Kraft der Feder aushebbar ist.

14. Ladegerät nach Anspruch 13,

**dadurch gekennzeichnet,** daß die Löseeinrichtung (35) eine etwa parallel zur Verschieberichtung der Plattform (3) an der Plattformunterseite verschiebbar gehaltene Stange (36) aufweist, die mit schräg zu ihrer Längsrichtung von dem Eingriff des bzw. der Sperrstifte (31) in die Bohrungen (33) abstrebenden Aushebeflächen (37) versehen ist, an denen Vorsprünge (38) angreifen, die an dem den spitzen Endbereich (32) der Sperrstifte (31) abgewandten Stiftende (39) vorgesehen sind und vorzugsweise Wälzglieder (40) aufweisen, die an den Aushebeflächen (37) im Zuge der Betätigung der Stange (36) der Löseeinrichtung (35) ablaufen.

15. Ledagerät nach einem der Ansprüche 1 bis 14, **dadurch gekennzeichnet,** daß Verlängerungsschienen (7') vorgesehen sind, mit denen die Laufschienen (7) des Laufschienenrahmens (6) zum Fahrersitz hin und/oder zur Rückseite des Fahrzeuges hin gerichtet verlängerbar sind, welche zusätzlichen Laufschienen (7') durch winkelförmige Einhänganschlüsse (51) an die jeweiligen Endabschnitte der Laufschienen (7) anschließbar sind, oder mit Hilfe von Scharnieren an die Enden der Laufschienen (7) angeschlossen sind, deren Scharnierachsen ein hochklappen oder ein seitliches Abklappen der Zusatz-Laufschienen (7') ermöglichen.

Fig. 1

Fig. 2

Fig.3

Fig.4

Fig.5

Fig. 6

Fig. 7

EP 0 314 176 A2

Fig. 8

Fig. 9

Fig. 10